Europäisches Patentamt

European Patent Office

Office européen des brevets

(11) Publication number: **0 354 570**
**A2**

# (12) EUROPEAN PATENT APPLICATION

(21) Application number: 89114802.5

(22) Date of filing: 10.08.89

(51) Int. Cl.4: **G11B 7/24**

(30) Priority: 11.08.88 US 231119

(43) Date of publication of application:
**14.02.90 Bulletin 90/07**

(84) Designated Contracting States:
**AT BE CH DE ES FR GB IT LI NL SE**

(71) Applicant: **THE DOW CHEMICAL COMPANY**
**2030 Dow Center, Abbott Road**
**Midland MI 48640(US)**

(72) Inventor: **Strandjord, Andrew J. G.**
**2625 Waskevich**
**Midland Michigan 48640(US)**
Inventor: **Yates, Ronald L.**
**402 Adams**
**Midland Michigan 48640(US)**
Inventor: **Perettie, Donald J.**
**3012 Travis Court**
**Midland Michigan 48640(US)**

(74) Representative: **Casalonga, Axel et al**
**BUREAU D.A. CASALONGA - JOSSE**
**Morassistrasse 8**
**D-8000 München 5(DE)**

(54) Discontinuous film optical storage media.

(57) A media for the storage of information having an active layer comprising a low melting metal alloy capable of at least partial agglomeration upon thermal treatment; said metal alloy including at least about 5 percent by weight of at least two of the metals selected from the group consisting of cadmium, indium, tin, antimony, lead, bismuth, magnesium, copper, aluminum, zinc and silver.

EP 0 354 570 A2

## DISCONTINUOUS FILM OPTICAL STORAGE MEDIA

The invention concerns information storage media that can be thermally written upon, preferably using a low power laser and read using an optical device.

Optically retrievable information storage media have been commercially available for some time in the form of video discs and audio discs (more commonly referred to as compact discs, i.e. CD's.) More recently, media has included other forms such as optical tape (Gelbart U.S. Patent No. 4,567,585), and data information cards, like that developed by Drexler Technology Corporation, Mountain View, CA. (Drexler U.S. Patent No. 4,544,835). Information is typically stored as extremely small structural relief features which are permanently encoded usually by exposure to laser light. Optical retrieval of such data is typically accomplished through differential reflection techniques using a frequency modulated laser light source.

WO 83/04330 (Shelvin) discloses a different method for making an optical memory media as a tri-layer structure involving a "light shutter" layer, a substrate and a reflective layer. Shelvin teaches the use of gold, titanium, rhodium, nickel, chromium, manganese and vanadium as suitable for the active or absorbing ultra-thin shutter layer. These metals are characterized as having high melting points and high thermal conductivities. In Shelvin, the metal layer is exposed to laser light during the encoding process and the metal is caused to agglomerate into "islands" leaving interstitial spaces. Shelvin teaches that such "islands' are only formed if the metals employed in the thin film possess high melting points and high thermal conductivities.

The present invention is an optical memory media useful for the storage of information that can be read using an optical device comprising an active layer, a substrate layer, and a reflective layer; said active layer comprising a low melting metal alloy layer capable of at least partial agglomeration upon thermal treatment; said metal alloy including at least about 5 percent by weight of at least two of the metals selected from cadmium, indium, tin, antimony, lead, bismuth, magnesium, copper, aluminum, zinc and silver.

Preferably the metal alloy comprises from 40 to 85 percent Sn, 10 to 50 percent Bi, and 1 to 15 percent Cu. A most preferred metal alloy comprises 70 percent Sn, 25 percent Bi and 5 percent Cu. The above percentages being based on weight. The metal alloy layer is preferably from 10 Å to 80 Å (1 to 8 nm) thick, more preferably from 20 Å to 60 Å (2 to 6 nm) thick, and most preferably from 30 Å to 40 Å (3 to 4 nm) thick.

In a preferred embodiment, the metal alloy layer is discontinuous, that is, the layer consists of adjacent nodes of deposited metal, the extreme outer surfaces of which are individually discernable by transmission electron microscopy (TEM) techniques. These concentrations are separated from each other by a sufficient degree that writing on the layer with a heat source results in at least a partial agglomeration of the layer. Upon exposure to a suitable heat source, the area so treated which normally is optically opaque becomes at least partially transparent due to at least a partial agglomeration of the metal alloy layer. Such agglomeration of the metal alloy is readily detected by observation of the treated active layer surface through TEM techniques and noting the formation of agglomerates of the metal alloy and the general formation of holes in the metal layer without concomitant formation of debris as would result purely from ablative processes.

The optical media of the present invention may be prepared by any suitable technique such as those disclosed in Shelvin. Generally, the active layer is deposited on a suitable substrate surface and a reflective layer, usually silver or aluminum, is deposited on the opposite surface to form the media of the invention. Generally suitable substrates include optically transparent polymers such as polycarbonate or other suitable substance.

Having described the invention, the following example is provided as further illustrative and is not to be construed as limiting.

### Example 1

An alloy of 70 percent by weight Sn, 25 percent Bi and 5 percent Cu was thermally flash evaporated onto a nitrocellulose substrate. The films resulting from the vapor deposited metal were discontinuous and ranged in thickness between 20 Å (2 nm) and 40 Å (4 nm). A diode laser write system was used to create optically detectable regions on these films. The topography of the regions so formed was analyzed utilizing TEM techniques.

The laser system used to write the alloy films consisted of an intensity modulated 30 milliwatt GaAlAs semiconductor laser (Ortel, Inc. Halambra, CA, USA). The power source for the laser was a Dynascan 3300 pulse generator. The output was collimated using a 0.40 numerical aperture collimating lens and directed through a Glan-Thompson prism. This linearly polarized light was passed through a quarter-wave-plate to form circularly polarized light. The polarized beam was then tightly focused and imaged onto the surface of the active layer using a 0.60 numerical aperture objective lens. As the laser beam was modulated, the sample was moved on a Newport 855C translation stage placed in a perpendicular position to the beam path.

Upon inspection of the TEM photographs, the previously mentioned regions were found to comprise minute smooth surfaced almost spheroidal shaped "islands" ranging in average size from 50 Å (5 nm) to 300 Å (30 nm) (number average). The intermetallic spacing of such islands ranged from 10 Å (1 nm) to 50 Å (5 nm) This topography is altered from that occurring in an unexposed region and indicates that some agglomeration had occurred leaving interstitial spaces through which light could transmit through the active layer of the media. No observable debris or other evidence of ablation was found.

## Example 2

An alloy of 75 percent by weight Sn, 20 percent Bi and 5 percent Cu is DC magnetron sputter deposited onto 5.25" (135 mm) round polycarbonate substrates. The films resulting from the deposition process are discontinuous in nature and range·in thickness between 2.0 nm and 6.0 nm. The diode laser system described in Example 1 is used to write digital information onto these films. Optically detectable regions are observed in the laser exposed areas. Agglomeration has occurred leaving interstitial spaces through which light (read beam) could transmit through the active layer of the media.

## Example 3

An alloy of 60 percent by weight Sn, 38 percent Bi and 2 percent Cu is Rf sputter deposited onto 2.125" x 3.175" (54 mm x 80 mm) PMMA substrates. The films resulting from the deposition process are discontinuous in nature and range in thickness between 2.4 nm and 4.4 nm. The diode laser system described in Example 1 is used to write digital information onto these films. Optically detectable regions are observed in the laser exposed areas. Agglomeration has occurred leaving interstitial spaces through which light (read beam) could transmit through the active layer of the media.

## Example 4

An alloy of 40 percent by weight Sn, 55 percent In and 5 percent Cu is DC sputter deposited on 3 mil (0.08 mm) polyester film substrates. The films resulting from the deposition process are discontinuous in nature and ranged in thickness between 2.0 nm and 4.0 nm. The diode laser system described in Example 1 is used to write digital information onto these films. Optically detectable regions are observed in the laser exposed areas. Agglomeration has occurred leaving interstitial spaces through which light (read beam) could transmit through the active layer of media.

## Example 5

A polycarbonate substrate is coated with approximately 800 Å (80 nm) of aluminum. Onto this layer is deposited about 800 Å of $SiO_2$ to form an antireflection spacer layer on top of the aluminum (80 nm) reflective layer. A 40 Å (4 nm) discontinuous film of an alloy consisting of 75 percent by weight Sn, 20 percent Bi and 5 percent Cu is DC magnetron sputter deposited on top of the spacer layer to form a media with a trilayer configuration. This trilayer structure yields a media with a background reflectivity level of less than 5 percent. The diode laser system described in Example 1 is used to write digital information onto these films. Optically detectable regions are observed in the laser exposed areas. In these areas the antireflection character of the film is disrupted such as to yield areas with high reflectivity and with high contrast playback ratios.

## Claims

1. A media for the storage of information that can be read using an optical device; said media comprising an active layer, substrate layer, and a reflective layer; said active layer comprising a metal alloy layer capable of at least partial agglomeration upon thermal treatment; said metal alloy including at least about 5 percent by weight of at least two of the metals selected from the group consisting of cadmium, indium, tin, antimony, lead, bismuth, magnesium, copper, aluminum, zinc and silver.

2. A media as claimed in Claim 1 wherein said metal alloy comprises from 40 to 85 percent by weight Sn, from 10 percent to 50 percent by weight Bi, and from 1 percent to 15 percent by weight Cu.

3. A media as claimed in Claim 1 wherein said metal alloy comprises 70 percent by weight Sn, 25 percent by weight Bi, and 5 percent by weight Cu.

4. A media as claimed in Claim 1 wherein the active layer is from 10 Å to 80 Å thick (1 nm to 8 nm).

5. A media as claimed in claim 1 wherein the active layer is from 20 Å to 60 Å thick (2 nm to 6 nm).

6. A method of fabricating optical memory storage media which comprises:

a) applying an ultra-thin film coating on a surface of a substrate material, said coating comprising a soft metal alloy; and thereafter

b) encoding information onto said coated surface, said coded information being in the form of an area of partial agglomeration of the metal layer.

7. A method of fabricating optical memory storage media as claimed in Claim 6 wherein said coating is of a thickness in the range of about 2.0 to 6.0 nm.

8. A method of fabricating optical memory storage media as claimed in Claim 6 wherein said coating is a metal alloy including at least 5 percent by weight of each of at least two of the metals selected from the group consisting of cadmium, indium, tin, antimony, lead, bismuth, magnesium, copper, aluminum, zinc, and silver.

9. A method of fabricating optical memory storage media as claimed in Claim 6 wherein said metal alloy comprises from 40 to 85 percent by weight Sn, from 10 to 40 percent Bi, and from 1 to 15 percent Cu.

10. A media for the storage of information that can be read using an optical device; said media comprises several layers including a reflective layer, a clear polymer spacer layer overlying said reflective layer, and an absorber layer, or layers, in island form overlying said spacer layer, the thicknesses and optical characteristics of said layers and the optically detectable changes of said absorber layer(s) being designed such that the detected read beam intensity will vary in accordance with these changes; said absorber layer is a metal alloy capable of at least partial agglomeration upon thermal treatment, said metal alloy including at least about 5 percent by weight of at least two of the metals selected from the group consisting of cadmium, indium, tin, antimony, lead, bismuth, magnesium, copper, aluminum, zinc, and silver.